# FASCICULE DE BREVET EUROPEEN

(11) **EP 3 290 785 B1**
(45) Date de publication et mention de la délivrance du brevet: **15.05.2019**
(21) Numéro de dépôt: 17188218.6
(22) Date de dépôt: 28.08.2017
(51) Int. Cl.: F21V 21/084, F21V 21/14, F21Y 101/00, F21Y 115/10

(54) **LAMPE FRONTALE DOTÉE D'UN BANDEAU RIGIDE OU SEMI/RIGIDE**
STIRNLAMPE, DIE MIT EINEM STARREN ODER HALBSTARREN BAND VERSEHEN IST
HEADLIGHT PROVIDED WITH A RIGID OR SEMI-RIGID BAND

(30) Priorité: 29.08.2016 FR 1601270
(43) Date de publication de la demande: 07.03.2018
(73) Titulaire: Zedel, 38920 Crolles (FR)
(72) Inventeur: BERREL, Philippe, 38580 LA CHAPELLE DU BARD (FR); BOUFFAY, Boris, 38660 SAINT HILAIRE DU TOUVET (FR); FRUH, Laurent, 38530 CHAPAREILLAN (FR); JARZAC, Sébastien, 38570 TENCIN (FR)
(74) Mandataire: Schuffenecker, Thierry

(56) Documents cités:
- CN-A- 103 216 793
- FR-A1- 2 971 037
- US-A1- 2007 177 376
- US-A1- 2008 298 048

## Description

### Domaine technique de l'invention

La présente invention concerne le domaine des lampes électriques portatives et notamment une lampe frontale dotée d'un bandeau rigide ou semi-rigide.

### Etat de la technique

Les lampes frontales, utilisées à l'origine par les mineurs, connaissent un vif succès dans le domaine des loisirs, et notamment la spéléologie et la randonnée. Elles figurent également en bonne place dans la panoplie des outils professionnels.

En général, une lampe frontale comporte l'association d'une lampe et d'un bandeau qui est élastique, et qui assure le maintien de la lampe sur la tête d'un utilisateur avec un confort optimum.

Si les lampes frontales ont évolué significativement depuis les dernières années, cette évolution a porté essentiellement sur la lampe elle-même : sa puissance, son autonomie, son électronique de commande etc... En revanche, le bandeau élastique qui en permet le maintien est resté à l'écart de ces évolutions... Il est vrai que la fonction de « maintien », qui est assurée honorablement par les bandeaux élastiques conventionnels, n'invite pas à une remise en question fondamentale d'un simple accessoire à ce qui fut considéré, pendant des décades, comme un « outil ». Dans un tel contexte, le bandeau de maintien fait figure d'accessoire mineur.

Or il est permis de penser que les lampes frontales sont susceptibles de connaître un grand essor et de devenir des objets « grand public » auxquels les consommateurs vont apporter une attention et un intérêt tout particulier dans la manière de se les « approprier » et de les utiliser, mais également dans le choix de « leur » lampe frontale, répondant à leurs besoins, quels qu'ils soient.

A cet égard, il est probable que ces consommateurs pourront être séduits par une « rupture » dans la conception des lampes frontales qui devront être plus ergonomiques, plus esthétiques et plus fonctionnelles. Suivant l'adage confirmant ce qui est beau est fonctionnel et réciproquement.

La présente invention a pour vocation d'apporter une réelle « rupture », au sens figuré, dans la conception d'un bandeau assurant le maintien en place d'une lampe frontale.

Les documents suivants sont cités au titre d'un arrière plan général :
Le document US 2008/298048 décrit une lampe frontale dotée d'une source lumineuse amovible, ayant un bandeau de longueur constante et symétrique par rapport à un plan sagittal médian.

Le brevet CN103216793 décrit un autre exemple de lampe frontale.

Le brevet FR2971037 décrit une lampe d'éclairage électrique portative dotée d'une fixation perfectionnée.

Le brevet US 2007/177376 décrit une lampe portable pouvant être utilisée sans le recours des mains de l'utilisateur.

### Exposé de l'invention

La présente invention a pour but de proposer une lampe frontale dotée d'un nouveau type de bandeau rigide/semi-rigide permettant de larges possibilités d'ajustement sur diverses têtes d'utilisateurs, voire sur un casque de protection.

Un autre but de la présente invention consiste à proposer une lampe frontale dotée d'un bandeau de maintien présentant un nouveau style et une nouvelle ergonomie, plus proche de la morphologie de l'utilisateur et lui assurant un meilleur confort.

C'est un troisième but de la présente invention que de réaliser une lampe frontale offrant une nouvelle esthétique particulièrement séduisante, susceptible de rencontrer de nouvelles catégories de consommateurs.

C'est un autre but de la présente invention que de fournir un lampe frontale dotée d'un bandeau offrant de nouvelles fonctionnalités, et notamment facilitant l'intégration de conducteurs électriques alimentant la lampe.

C'est un cinquième but de la présente invention que de réaliser une lampe frontale dotée d'un bandeau facilitant l'intégration d'une batterie ou d'un feu arrière à l'arrière du bandeau.

C'est un autre but de la présente invention que de réaliser une lampe frontale dotée d'un bandeau offrant une nouvelle utilisation ergonomique en « tour de cou » et/ou lampe à poser, avec la possibilité d'un large ajustement du faisceau lumineux...

L'invention réalise ces buts au moyen d'une lampe frontale comportant :
- une lampe dotée d'une source lumineuse ;
- un bandeau permettant la fixation de la lampe sur la tête d'un utilisateur,
   caractérisé en ce que le bandeau est de longueur constante et symétrique par rapport à un plan sagittal médian et comporte une alternance d'éléments rigides/semi-rigides pour permettre une déformation dans l'espace et l'ajustage à la tête d'un utilisateur.

Plus particulièrement, le bandeau comporte
- une partie avant rigide/semi-rigide permettant une déformabilité suivant un premier plan (x, y) ;
- une partie intermédiaire rigide/semi-rigide permettant une déformabilité suivant un second plan (x, z) ;
- une partie arrière rigide/semi-rigide permettant une déformabilité suivant un troisième plan (y, z) ;
le bandeau comportant des éléments permettant la fixation et le passage d'un élastique de serrage permettant de contraindre la déformation du bandeau rigide/semi-rigide suivant les trois plans.

Cette structure unique du bandeau, qui se présente avec une certaine capacité de déformation tout en maintenant une longueur constante, offre une nouvelle esthétique, un style inédit ainsi que de nouvelles possibilités fonctionnelles.

Par ailleurs, comme on le verra plus loin, le nouveau bandeau présente une capacité d'ajustement exceptionnelle puisqu'il permet des variations de 19cm de périmètres pour les différentes têtes d'utilisateurs, et même un casque de chantier.

De préférence, le bandeau est configuré pour permettre la fixation, à l'arrière, d'une batterie pour l'alimentation électrique de la lampe.

Alternativement, le bandeau pourra comporter, à l'arrière, un feu arrière.

De manière très avantageuse, le bandeau pourra présenter une section tubulaire de manière à pouvoir y intégrer une pluralité de conducteurs électriques servant à l'alimentation électrique de la lampe et/ou la commande des fonctionnalités de la lampe.

Alternativement, le bandeau pourra intégrer également une ou plusieurs fibres optiques permettant de véhiculer vers l'arrière, vers l'avant et même latéralement une fraction du faisceau lumineux générée par ladite lampe.

Dans un mode de réalisation préféré, l'on pourra doter les éléments rigides du bandeau d'un ou plusieurs commutateurs et/ou afficheur pour la commande des fonctionnalités de la lampe.

De préférence, la lampe fixée à l'avant du bandeau et est dotée d'au moins un pivot permettant de pivoter sur ladite partie avant dudit bandeau, et configurée pour permettre un pivot d'au moins 180 degrés. De ce fait, le pivot permet de régler le faisceau lumineux de la lampe pour un éclairage horizontal, mais également vers le bas, lorsque le lampe est portée en tour de cou.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un premier mode de réalisation d'un bandeau rigide/semi-rigide d'une lampe frontale permettant des déformations suivant trois plans xz, xy et yz.
La figure 2 illustre le positionnement du bandeau suivant le premier mode de réalisation sur la tête d'u utilisateur.
La figure 3 illustre un second mode de réalisation d'un bandeau rigide/semi-rigide d'une lampe frontale permettant des déformations suivant trois plans xz, xy et yz.
La figure 4 illustre un troisième mode de réalisation d'un bandeau comportant un élément avant et trois élément latéraux semi-rigides permettant des déformations suivant trois plans xz, xy et yz.
La figure 5 illustre le positionnement du bandeau suivant le troisième mode de réalisation sur la tête d'un utilisateur.
La figure 6 illustre une perspective arrière d'un exemple de réalisation d'un bandeau rigide/semi-rigide suivant le troisième mode de réalisation.
La figure 7 illustre une perspective avant du bandeau de la figure 6.
La figure 8 illustre un quatrième mode de réalisation d'un bandeau comportant également un élément avant et trois élément latéraux semi-rigides d'une lampe frontale permettant des déformations suivant trois plans xz, xy et yz.
La figure 9 montre le positionnement du quatrième mode de réalisation sur la tête d'un utilisateur.
La figure 10 montre la vue de gauche d' un exemple de réalisation d'un bandeau rigide/semi-rigide suivant le quatrième mode de réalisation.
La figure 11 illustre la vue de droite du bandeau de la figure 10.
La figure 12a illustre un détail d'un élément rigide permettant le passage d'un élastique de serrage du quatrième mode de réalisation.
La figure 12b illustre un exemple d'une lampe fixée, au moyen d'un pivot, sur un élément rigide à l'avant du bandeau.
La figure 13 illustre le quatrième mode de réalisation, dotée d'une batterie fixée à l'arrière du bandeau rigide/semi-rigide.
La figure 14 est une perspective arrière, illustrant le positionnement du bandeau rigide/semi-rigide suivant le quatrième mode de réalisation sur une tête de petite dimension.
La figure 15 montre le positionnement du même bandeau que celui utilisé dans la figure 14, avec le même serrage de l'élastique, sur une tête de plus grande dimension.
La figure 16 illustre l'ajustage du bandeau rigide/semi-rigide sur la tête de grande dimension de la figure 15.
La figure 17 illustre l'ajustage du bandeau rigide/semi-rigide suivant le quatrième mode de réalisation sur un casque.
La figure 18 illustre une vue de gauche d'un mannequin portant, autour de son cou, un mode de réalisation d'une lampe frontale conforme à la présente invention.
La figure 19a illustre une vue arrière droite d'un mannequin portant, autour de son cou, un mode de réalisation d'une lampe frontale conforme à la présente invention, dans lequel la lampe est montrée dans deux positions de pivot distinctes.
La figure 19b illustre un mode de réalisation d'une lampe frontale conforme à la présente invention, basée sur un bandeau rigide/semi-rigide et dotée d'un pivot d'au moins 180 degrés.
La figure 20 illustre une mise en situation du mode de réalisation de la figure 17 pour une application en « tour de cou » ou lampe à poser sur un support.
La figure 21 est un mode de réalisation d'un bandeau comportant une batterie et une lampe pouvant se fixer l'un à l'autre de manière à adopter un volume très compact.
La figure 22 illustre l'utilisation du nouveau bandeau en lampe à poser sur une table ou un support quelconque.

### Description d'un mode de réalisation préféré

L'on décrit à présent le détail de modes de réalisation d'une lampe frontale dotée d'un bandeau de maintien confortable présentant une nouvelle allure, un nouveau style qui se positionnent clairement en rupture avec les bandeaux conventionnels. Au delà de l'esthétique et du style, le nouveau bandeau apporte, comme on le verra ci-après, de multiples nouvelles fonctionnalités techniques et notamment une intégration facilitée des conducteurs électriques à l'intérieur du bandeau et également de nouvelles possibilités d'utilisation, notamment en « tour de cou » et même en lampe de table .

Pour réaliser cette « rupture » avec les bandeaux conventionnels, les inventeurs ont cherché à s'abstraire du bandeau élastique conventionnel, de longueur variable pour assurer l'ajustement du bandeau aux diverses dimensions de têtes d'utilisateurs. Il a ainsi été réalisé un nouveau bandeau présentant une combinaison de structures rigide/semi-rigide de longueur constante et appartenant à une famille de formes tri-dimensionnelles susceptibles de se déformer dans l'espace, suivant plusieurs plans.

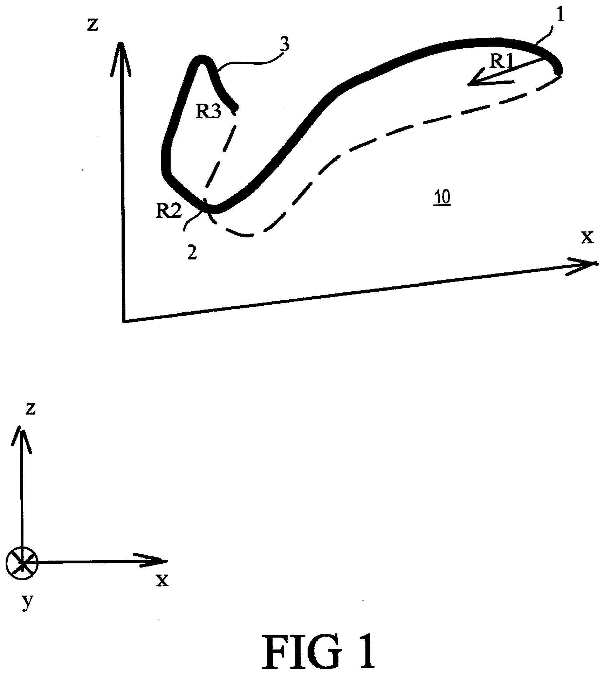

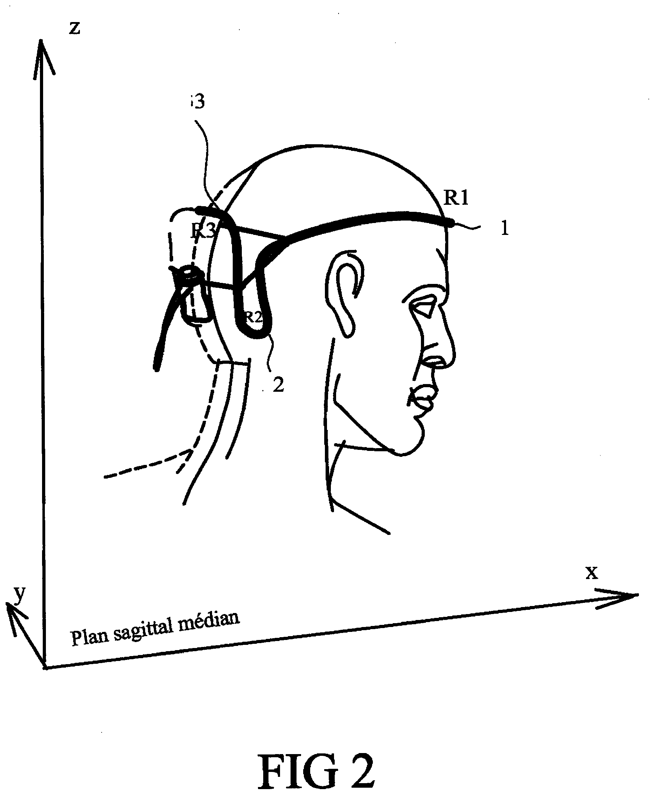

La figure 1 illustre le tracé tri-dimensionnel d'un premier mode de réalisation d'un bandeau rigide/semi-rigide 10 d'une lampe frontale qui offre des possibilités de déformations tridimensionnelles à longueur constante, dans l'espace et notamment suivant trois plans xz, xy et yz. L'on voit en particulier que le bandeau se présente sous la forme d'un support de forme tubulaire, symétrique par rapport à un plan (x, z) correspondant approximativement à un plan sagittal médian pour le porteur de la lampe (et représenté en figure 2). Le premier mode de réalisation qui est schématisé dans la figure 1 montre une partie avant 1 rigide/semi-rigide (mais déformable) sur laquelle sera fixée la lampe, et qui est approximativement localisée dans un plan horizontal (x, y) correspondant à un plan transversal par rapport au porteur de la lampe. En première approximation, on a représenté le rayon de courbure R1 de la courbe 1 qui se situe dans le plan (x,y).

En arrière de la partie avant - vers la gauche dans la figure 1 - on voit que le tracé du bandeau 10 comporte une courbe 2 qui s'inscrit approximativement dans un plan vertical (x, z) qui est parallèle au plan sagittal de l'utilisateur. Dans ce plan, le bandeau suit une courbe qui, en première approximation comporte un rayon de courbure représenté par R2 dans la figure 1.

En arrière du bandeau, celui-ci suit une courbe 3 qui s'inscrit plutôt dans un plan (y, z) qui correspond à un plan frontal par rapport à l'utilisateur de la lampe et l'on voit à nouveau que, en première approximation, la courbe dans laquelle s'inscrit le bandeau montre un rayon de « courbure » égal à R3...

Comme on le voit dans la figure 1 montrant la symétrie de la courbe, le trait pointillé correspond à la partie du bandeau (gauche) qui est située « cachée » et derrière le plan sagittal (x, z) qui est le plan de symétrie.

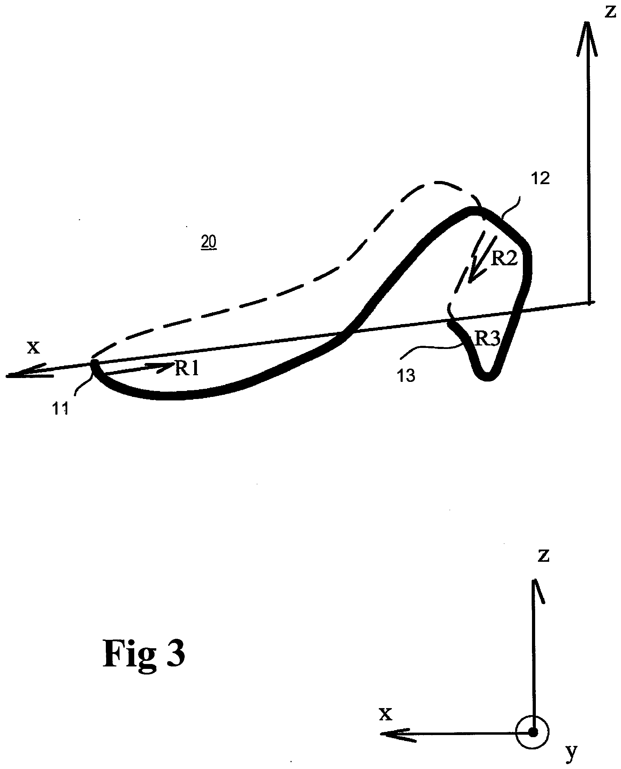

On voit que la partie arrière du premier mode de réalisation du bandeau « monte » avant de rejoindre le plan sagittal médian, contrairement à un second mode de réalisation qui sera décrit en relation avec la figure 3, et qui montre une partie arrière qui « descend ».

Comme on le voit sur ce premier mode de réalisation, le bandeau comporte donc :
- une partie avant rigide/semi-rigide 1 permettant une certaine déformabilité suivant un premier plan (x, y) qui est un plan transversal ;
- une partie intermédiaire rigide/semi-rigide 2 permettant une certaine déformabilité suivant un second plan (x, z) qui est un plan sagittal ;
- une partie arrière rigide/semi-rigide 3 permettant une certaine déformabilité suivant un troisième plan (y, z) qui est un plan frontal.

Grâce à cette disposition avantageuse, l'on obtient une forme tridimensionnelle qui est déformable, suivant chacun des plans ci-dessus, tout en permettant de conserver au bandeau de forme tubulaire une longueur constante qui s'avérera particulièrement avantageuse comme on le verra plus loin. En d'autres terme, bien que restant à longueur constante, c'est la déformation du tracé dans les différents plans - à savoir la variation des rayons de courbures R1, R2 et R3, qui permet à présent au bandeau d'épouser la forme de la tête d'un utilisateur.

Plus spécifiquement, le bandeau suivant le premier mode de réalisation comporte une alternance d'élément rigides/semi-rigides présentant des caractéristiques (grades) différents, permettant de réaliser la forme illustrée dans la figure 1. En outre, le bandeau comporte des éléments plus rigides permettant la fixation et le passage d'un élastique de serrage permettant de contraindre la déformation du bandeau rigide/semi-rigide suivant les trois plans, comme cela est représenté dans le schéma de la figure 2 schématisant une perspective arrière d'un utilisateur dont la tête reçoit le bandeau de la figure 1 . Dans le nouveau bandeau rigide/semi-rigide, on a séparé la fonction de l'élastique de serrage , dont la longueur varie, avec la fonction du bandeau qui, lui, reste à longueur constante.

La figure 3 illustre un second mode de réalisation d'un bandeau rigide/semi-rigide 20 d'une lampe frontale présentant un « arrière » qui descend avant de traverser le plan sagittal médian. Plus spécifiquement, le bandeau comporte une partie avant 11 qui est rigide/semi-rigide, permettant la fixation d'une lampe via une liaison pivot, et qui est localisée approximativement dans un plan horizontal (x, y) correspondant à un plan transversal du porteur de la lampe. Comme précédemment, en première approximation, on a représenté le rayon de courbure R1 de la courbe 11 qui se situe dans le plan (x,y).

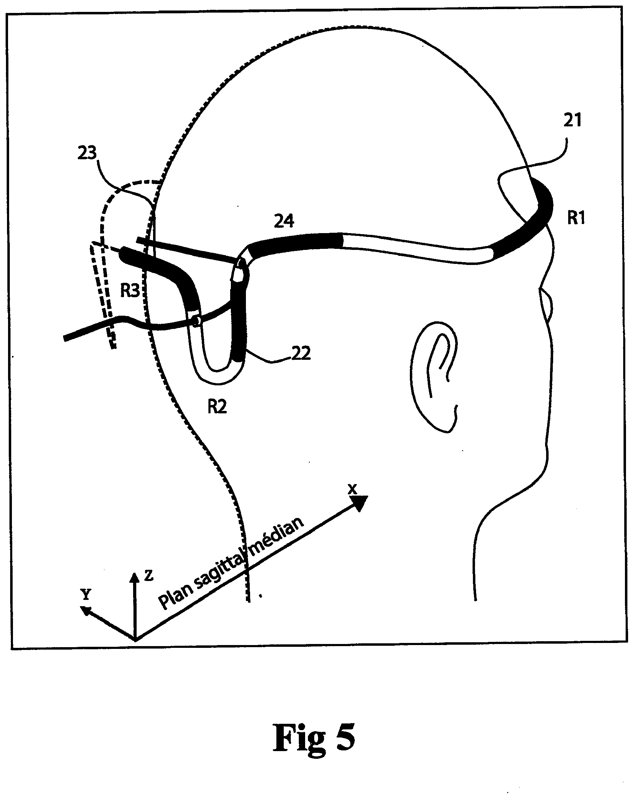

En arrière de la partie avant - vers la droite dans la figure 5 - on voit que le bandeau 20 suit ensuite une courbe 12 qui s'inscrit approximativement dans un plan vertical (x, z) parallèle au plan sagittal de l'utilisateur et, à nouveau, on a représenté l'approximation du rayon de courbure R2.

En arrière, le bandeau 20 suit une courbe 13 qui s'inscrit approximativement plutôt dans un plan (y, z) correspondant au plan frontal par rapport à l'utilisateur de la lampe et l'on voit l'approximation d'un rayon de « courbure » égal à R3...

Comme précédemment, la plan sagittal médian sert de plan de symétrie et la partie en pointillé correspondant à la partie du bandeau située « derrière » le plan sagittal médian.

On voit que la partie arrière du second mode de réalisation du bandeau 20 « descend » à présent avant de rencontrer le plan sagittal médian, contrairement au schéma du premier mode de réalisation illustré dans la figure 1 .

Toutefois, comme précédemment, l'on constate que le bandeau 20 comporte donc :
- une partie avant rigide/semi-rigide 11 permettant la fixation d'une lampe 101 et offrant une certaine déformabilité suivant un premier plan (x, y) qui est un plan transversal ;
- une partie intermédiaire rigide/semi-rigide 12 permettant une certaine déformabilité suivant un second plan (x, z) qui est un plan sagittal ;
- une partie arrière rigide/semi-rigide 13 assurant une certaine déformabilité suivant un troisième plan (y, z) qui est un plan frontal.

L'on obtient, une fois encore, grâce à cette disposition avantageuse, une forme tridimensionnelle qui est déformable, suivant l'un quelconque des plans ci-dessus, tout en préservant une longueur constante pour le bandeau 20.

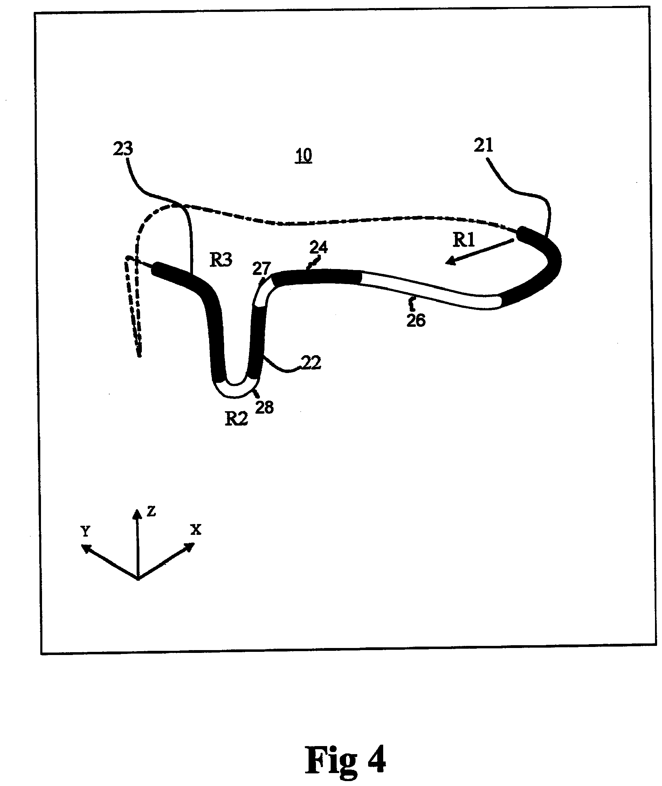

Dans un mode de réalisation particulier, le bandeau 20 comporte une alternance d'élément rigides/semi-rigides comme cela va être à présent décrit plus spécifiquement ci-après, avec les figures 4-22.

A cet égard, la figure 4 illustre un troisième mode de réalisation sensiblement similaire au bandeau 10 de la figure 1, mais qui comporte plus spécifiquement une alternance d'éléments rigides et semi-rigides (déformables). Les éléments rigides sont illustrés en clair sur la figure tandis que les éléments semi-rigides (déformables) sont représentés en foncé. Comme on le voit, le bandeau 10 de la figure 4 comporte une branche droite dotée d'une partie avant 21 semi-rigide déformable puis, de la droite vers la gauche :
- une partie latérale 26 rigide (claire),
- une partie latérale 24 semi-rigide (foncée),
- une partie latérale 27 rigide (claire),
- une partie latérale 22 semi-rigide (foncée),
- une partie latérale 28 rigide (claire),
- une partie arrière 23 semi-rigide (foncée).

Comme on le voit, la partie avant 21, les parties latérales 24 et 22, et la partie arrière 23 qui sont toute semi-rigides, permettent la déformation du bandeau à longueur constante dans les trois plans (x, y), (x, z) et (y, z). Provoquant ainsi la variabilité des rayons de courbures R1, R2 et R3 permettant la fixation du bandeau 10 sur une tête de dimension quelconque.

La figure 5 illustre le positionnement du bandeau suivant le troisième mode de réalisation sur la tête d'un utilisateur.

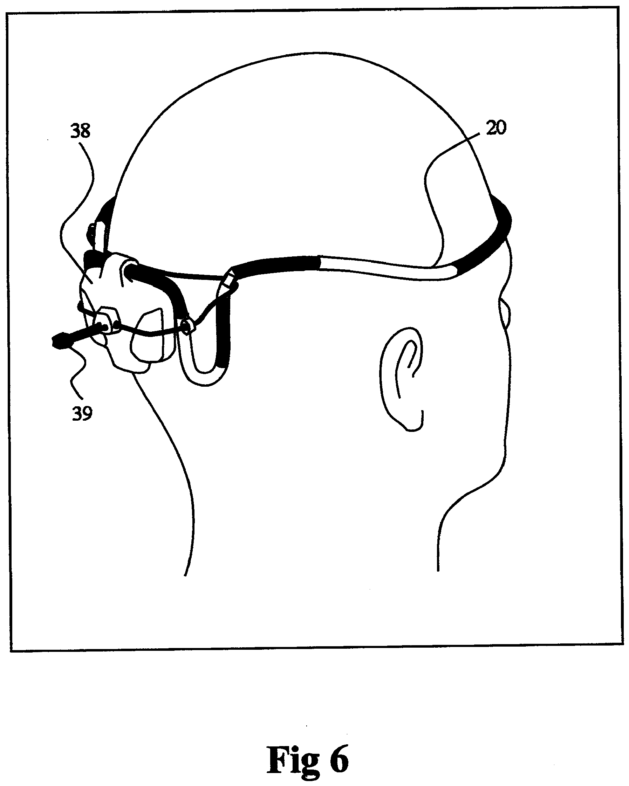

La figure 6 illustre une perspective arrière d'un exemple de réalisation d'un bandeau rigide/semi-rigide suivant le troisième mode de réalisation, où l'on voit que la partie arrière du bandeau - qui «monte » - permet la fixation d'une batterie 38 et d'un dispositif de fixation 39 de l'élastique de serrage. Dans un mode de réalisation particulier la batterie est logée dans un boîtier arrière mobile en rotation grâce à une liaison pivot (non représentée) .

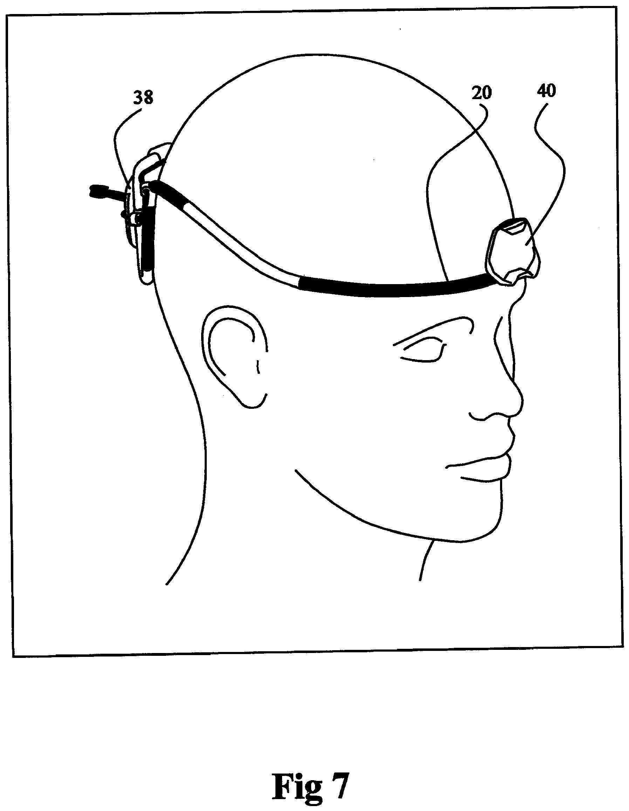

La figure 7 illustre une perspective avant du bandeau de la figure 6 où l'on voit distinctivement la lampe 40 et la batterie en position arrière.

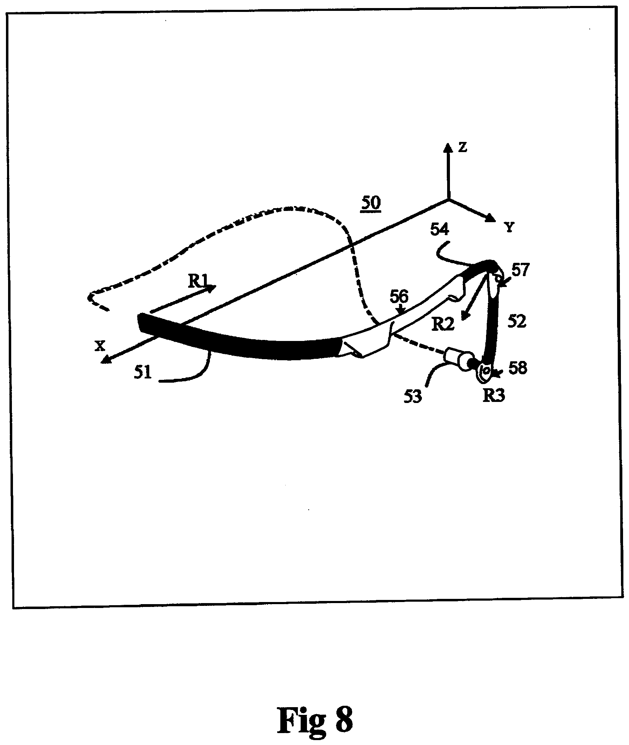

La figure 8 illustre un quatrième mode de réalisation d'un bandeau 50 comportant également, comme pour le bandeau de la figure 4, une alternance d'éléments semi-rigides déformables 51, 54, 52, 53 (en foncé), et d'éléments rigides 56, 57, 58 (en clair), permettant la déformation du bandeau à longueur constante dans les trois plans (x, y), (x, z) et (y, z) et la variabilité des angles de courbures R1, R2 et R3, respectivement. Comme précédemment, la figure 8 montre une branche gauche du bandeau comportant une partie avant semi-rigide 51 et trois parties latérales semi-rigides 54, 52 et 53. La branche droite n'est pas représentée sur la figure 8 par souci de simplicité, mais peut être construite par symétrie par rapport au plan (xz).

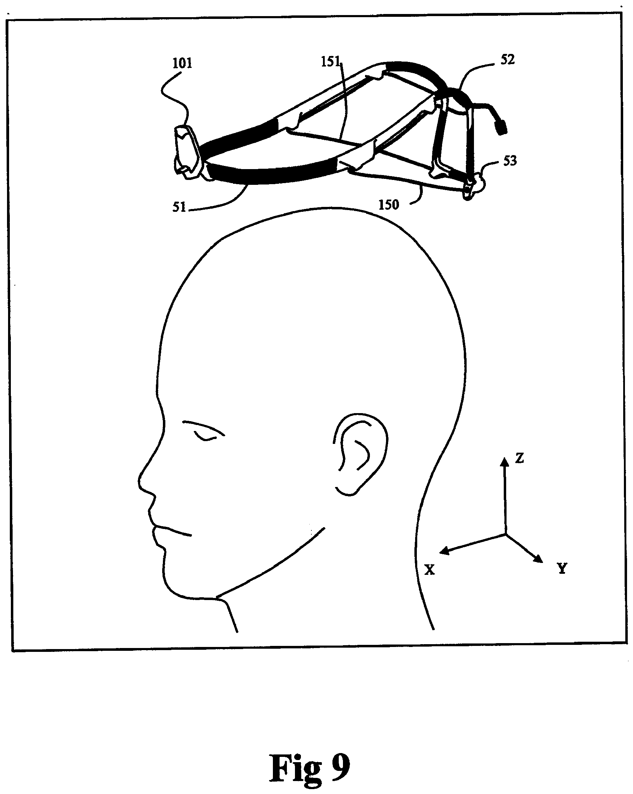

La figure 9 montre le positionnement du quatrième mode de réalisation sur la tête d'un utilisateur. On voit également dans cette figure 9 que le bandeau 50 comporte des éléments rigides (en clair) permettant la fixation et le passage d'un élastique, respectivement 151 et 150, pour assurer le serrage permettant de contraindre la déformation du bandeau rigide/semi-rigide suivant les trois plans, en réduisant les rayons de courbures R1-R3.

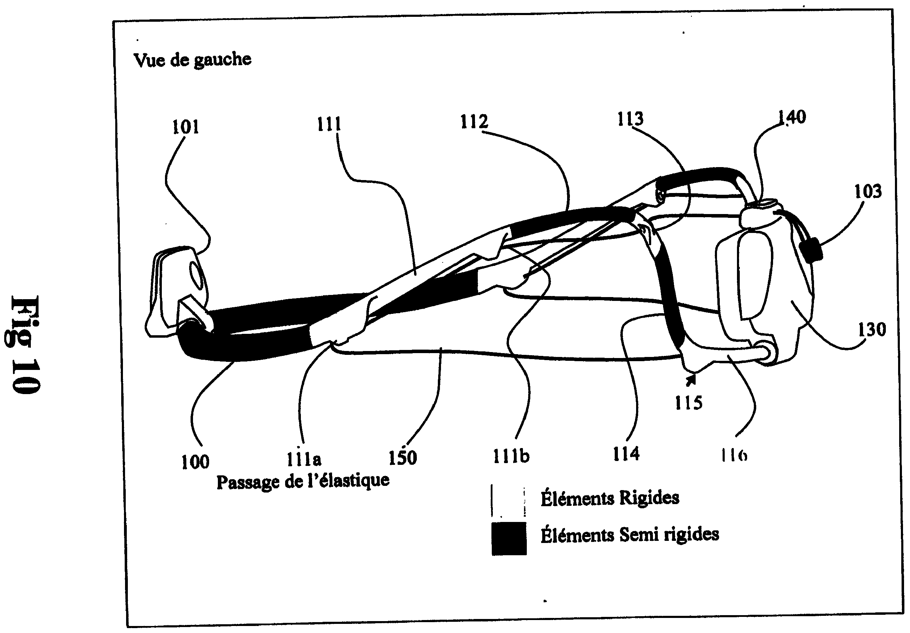

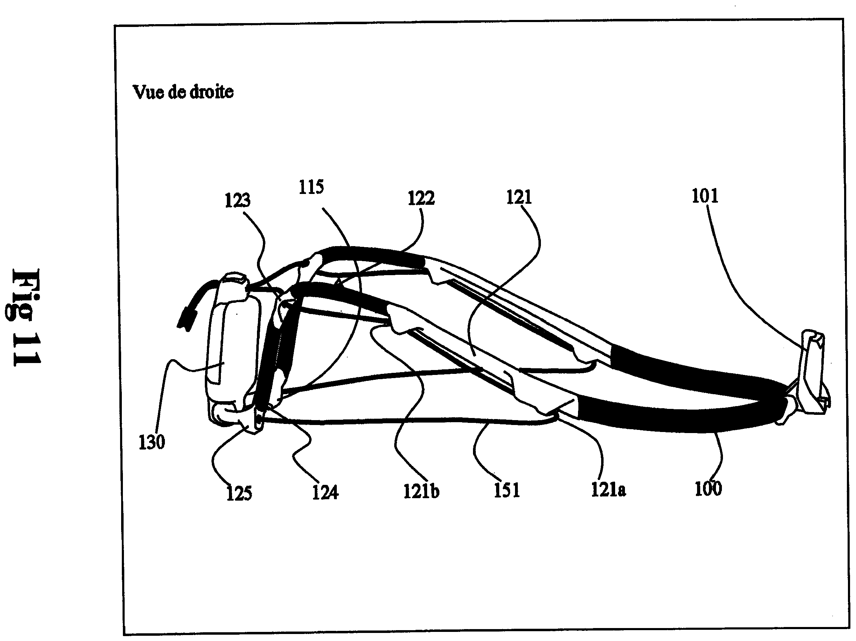

Les figures 10 et 11 illustrent le détail d'une réalisation concrète d'un bandeau rigide/semi-rigide suivant le quatrième mode de réalisation. Le bandeau comporte une alternance d'éléments rigides, représentés en clair sur les figures 7 et 8, et d'éléments plus souples qui sont représentés en foncé.

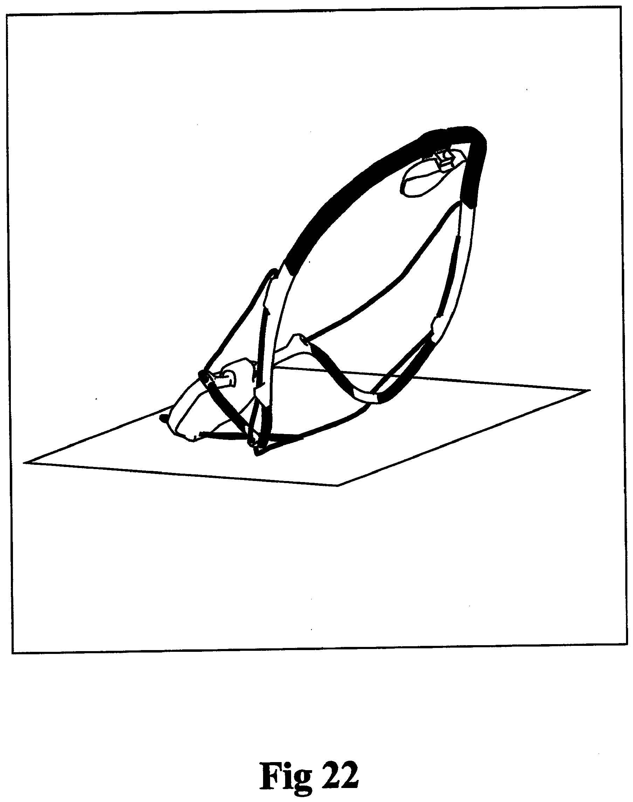

Dans un mode de réalisation particulier, les éléments pourront être réalisé en polyuréthane thermoplastique (TPU) ou en polyamide, polyester , PVC avec des grades choisis pour permettre la réalisation d'une structure rigide/semi-rigide offrant une structure stable (permettant même le positionnement du bandeau sur une table comme représenté dans la figure 22) tout en étant suffisamment déformable au moyen d'un élastique 150. En pratique, les éléments plus rigides présenteront un grade compris dans la gamme [ , 73SHD] tandis que les éléments plus souples (semi-rigides) présenteront un grade compris dans la plage de valeurs [ , 70 Sh A].

En référence à la figure 10 qui montre plus spécifiquement une vue de gauche du bandeau, celui-ci comporte une partie avant semi-rigide 100 sur laquelle sera fixée une pièce rigide dénommée « platine » servant de support, via une liaison pivot, à une lampe 101 comportant une ou plusieurs LED(s) associée(s) à son circuit électronique. La partie avant pourra être extrudée. De préférence, la lampe 101 comporte une pluralité de LEDs de puissance moyenne, et leur optique associées. De ce fait, la lampe prendra une forme relativement plate, avec une surface de dissipation de la chaleur importante, ce qui permettra de disposer directement les LEDs sur un circuit imprimé faisant office de radiateur. Il en résultera ainsi une lampe 101 particulièrement compacte.

Le bandeau comporte, en outre, une partie arrière 116 rigide (claire) formant une partie arrière du bandeau. Alternativement, l'élément 116 pourra devenir semi-rigide pour s'adapter sur le plan xy.

Le bandeau 20 comporte, sur sa branche de gauche, un premier élément rigide 111 (de rigidité supérieure à l'élément semi-rigide 100) ayant une première extrémité inférieure fixée à une première extrémité de la partie avant 100, ainsi qu'une seconde extrémité supérieure fixée à un second élément 112 semi-rigide (foncé, donc plus souple) . L'élément rigide 111 comporte, respectivement à ses deux extrémités inférieure et supérieure, deux éléments de passage 111a et 111b pour un premier élastique de serrage 150.

Le second élément semi-rigide 112 comporte une première extrémité fixée à la seconde extrémité du premier élément 111 et une seconde extrémité fixée à une première extrémité d'un troisième élément rigide 113 servant de point de passage de l'élastique 150 provenant de l'éléments 111b de la branche gauche.

Le bandeau comporte ensuite un quatrième élément souple (semi-rigide) 114 disposant d'une première extrémité supérieure fixée à une seconde extrémité du troisième élément 113 et d'une seconde extrémité fixée à un cinquième élément rigide 115 permettant la fixation du premier élastique 150 provenant du point de passage 111a.

La branche gauche du bandeau est fixée enfin à une première extrémité de l'élément rigide ou semi-rigide 116 formant la partie arrière du bandeau rigide/semi-rigide, via une seconde extrémité de l'élément rigide 115.

On notera que suivant le mode de réalisation considéré, la partie arrière 116 pourra être rigide ou semi-rigide en sorte que les éléments 115 et 116 pourront être de fabrication ou non. Lorsque la partie arrière 116 sera semi-rigide (foncé), alors le cinquième élément rigide 115 sera distinct de cette dernière . Au contraire, si la partie arrière 116 est rigide, les éléments 115 et 116 pourront être identiques.

La figure 10 illustre le détail de la branche gauche du bandeau qui est, comme on le voit , parfaitement symétrique par rapport à la branche droite. On voit dans la figure 11 que la branche droite comporte un sixième élément rigide 121 ayant une première extrémité inférieure fixée à une seconde extrémité de la partie avant 100 ainsi qu'une seconde extrémité supérieure fixée à une première extrémité d'un septième élément souple (semi-rigide) 122. L'élément rigide 121 comporte, respectivement à ses deux extrémités inférieure et supérieure, deux éléments de passage 121a et 121b pour un second élastique de serrage 151.

L'élément souple 122 comporte une première extrémité fixée à l'élément 121 et une seconde extrémité fixée à un huitième élément rigide 123 servant de point de passage de l'élastique 151 provenant de l'éléments 121b de la branche gauche.

Le bandeau comporte ensuite un neuvième élément souple (semi-rigide) 124 disposant d'une première extrémité supérieure fixée à une seconde extrémité de l'élément 123 et d'une seconde extrémité inférieure située à une première extrémité d'un dixième élément rigide 125 et permettant la fixation du second élastique 151 provenant du point de passage 121a.

La branche droite du bandeau est enfin fixée à l'élément arrière (semi-rigide) 116 qui forme l'arrière du bandeau rigide/semi-rigide via une seconde extrémité de l'élément rigide 125.

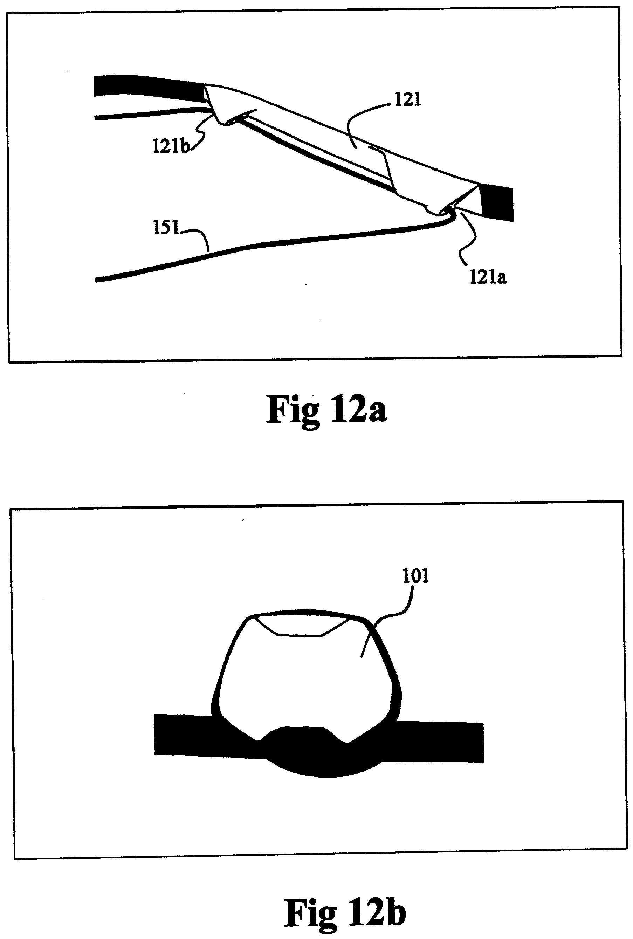

La figure 12a illustre le détail de l'élément rigide 121 comportant, à ses deux extrémités 121a et 121b, les points de passage de l'élastique 151 permettant la contrainte sur le rayon de courbure R2 et , par conséquent, la déformation du bandeau dans le plan sagittal (x, z)
La figure 12b illustre un exemple d'une lampe 101 fixée sur la partie avant semi-rigide du bandeau, et ce au moyen d'un pivot présentant une large amplitude - supérieure à 180 degrés - sur un élément rigide à l'avant du bandeau. Cette fonction pivot de large amplitude permet, comme on le verra ci-après, une possibilité d'ajustement supplémentaire de la lampe frontale lorsque celle-ci est utilisée en « tour de cou ». Plus précisément, le pivot de la lampe frontale est avantageusement configuré pour permettre une rotation de 90° environ, ce qui permet une meilleure adaptabilité à la morphologie du porteur et donc améliore le confort. Cette rotation permet aussi d'augmenter considérablement l'équilibre de la lampe quand elle est posée sur une table par exemple.

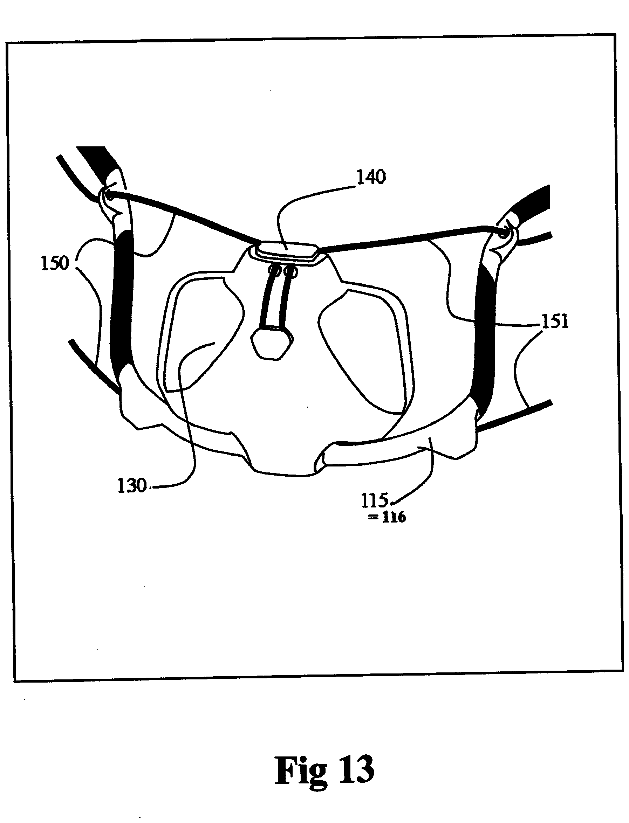

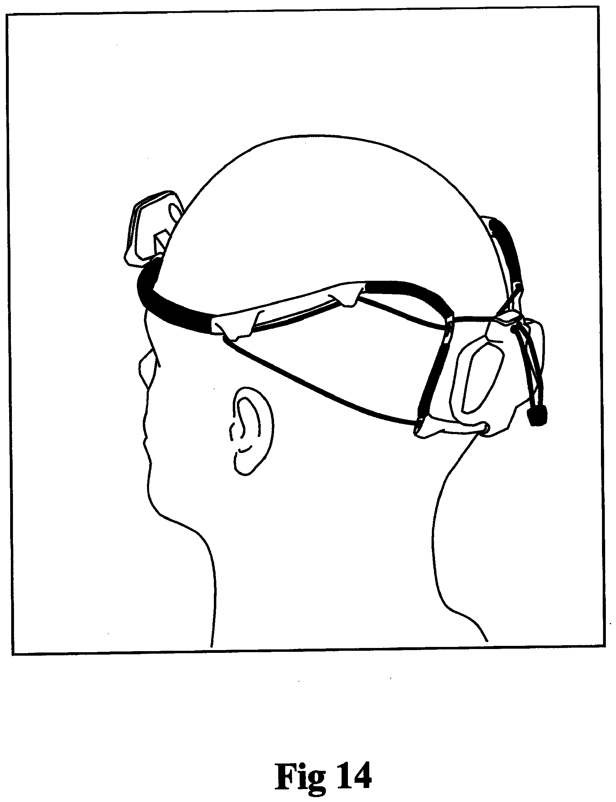

Dans un mode de réalisation particulier, le bandeau illustré dans les figures 13 et 14 comporte, à l'arrière une batterie d'alimentation 130 pour l'alimentation en courant de la lampe 101. De préférence, la batterie comporte, sur le dessus, un trou de passage pour les élastiques 150 et 151 avec un bouton de blocage 140. La figure 13 illustre une vue arrière du bandeau mettant clairement en évidence la batterie 130, le trou de passage des élastiques 150 et 151 et le bouton de blocage 140. Dans le schéma de la figure 13, on constate que la partie arrière 116 est réalisé en matériau rigide comme l'élément 116, en sorte que les deux éléments 115 et 116 sont réalisés à partir d'un même procédé de fabrication. Mais il ne s'agit que d'un mode de réalisation particulier car, une fois encore, l'élément 116 pourra être , optionnellement, en matériau semi-rigide.

Comme on le voit, le bandeau forme une structure d'ensemble, constituée d'une alternance d'éléments rigides et semi-rigides, qui est relativement stable puisqu'elle peut être posée sur une table à la manière d'un objet quelconque. De cette manière, la lampe frontale pourra servir de lampe de table. Par ailleurs, la flexibilité des éléments souples permet une déformabilité du bandeau dans l'espace qui est réalisé par le serrage des élastiques 150 et 151 et leur blocage au niveau du bouton de blocage 140 situé sur le dessus de la batterie qui, elle également, pourra pivoter vers l'arrière en tant que de besoin.

L'on réalise ainsi un bandeau présentant une nouvelle esthétique, une allure inédite et originale, qui est susceptible de rencontrer de nouvelles catégories de consommateurs, potentiellement rebutés par l'aspect « outil » des lampes frontales traditionnelles.

Par ailleurs, ce bandeau rigide/semi-rigide d'un nouveau type offre de multiples nouvelles fonctionnalités, comme on va le voir à présent.

Dans un mode de réalisation particulier, les branches gauche et/ou droite du bandeau sont creuses et leur longueur constante permet de venir y intégrer une pluralité de conducteurs électriques et/ou fibres optiques, On s'affranchit ainsi, d'une manière particulièrement élégante et fonctionnelle, des fils électriques que l'on connaît dans les lampes frontales conventionnelles dotées d'un bandeau élastique à longueur non constante. L'espace sera suffisant pour y intégrer, au sein des éléments rigides/souples, des conducteurs de puissance et des conducteurs de commande qui y seront ainsi particulièrement bien protégés.

Dans un mode de réalisation particulier, le bandeau comporte un feu arrière permettant la signalisation du porteur de la lampe. Ce feu arrière pourra être réalisé au moyen d'une lampe secondaire fixée sur la batterie 130 ou, alternativement, en venant déporter une fraction de la lumière créée par la lampe 101 grâce à une ou plusieurs fibres optiques. L'on peut ainsi avantageusement déporter de la lumière de l'avant vers l'arrière. Inversement, l'on peut également combiner une source lumineuse dans le boîtier arrière (rouge) avec un jeu de fibres optiques afin de venir déporter vers l'avant ou vers le côté une fraction de la lumière (rouge) générée par le boîtier arrière.

Dans un mode de réalisation particulier, la partie avant 100, voire les branches rigides 111 et 121 sont équipés de commutateurs permettant la commande des fonctionnalités de la lampe, ce que n'offrait assurément pas les bandeaux conventionnels. Alternativement et/ou cumulativement on peut prévoir un ou plusieurs afficheurs permettant de réaliser une ergonomie homme-machine ( IHM) avantageuse.

Dans un autre mode de réalisation particulier, les branches gauche et droite du bandeau sont conçues pour être lumineuse de manière à permettre un signalement latéral efficace du porteur de la lampe.

La figure 14 est une perspective arrière, illustrant le positionnement du bandeau rigide/semi-rigide suivant le second mode de réalisation sur une tête de petite dimension.

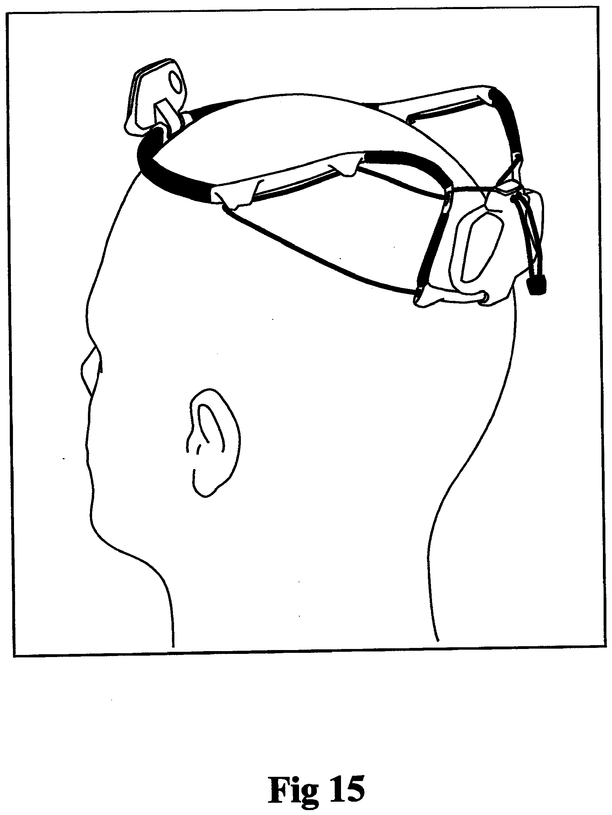

La figure 15 montre le positionnement du même bandeau que celui utilisé dans la figure 14, avec le même serrage de l'élastique, sur une tête de plus grande dimension. L'on constate que le réglage du bandeau réalisé pour la figure 14 ne permet absolument pas le positionnement sur une tête de dimension plus grande. Néanmoins, il suffit d'appuyer sur le bouton 140 pour libérer les élastiques 150-151 et relâcher la déformation du bandeau de manière à lui permettre de venir épouser la forme de tête plus grande de l'utilisateur considéré.

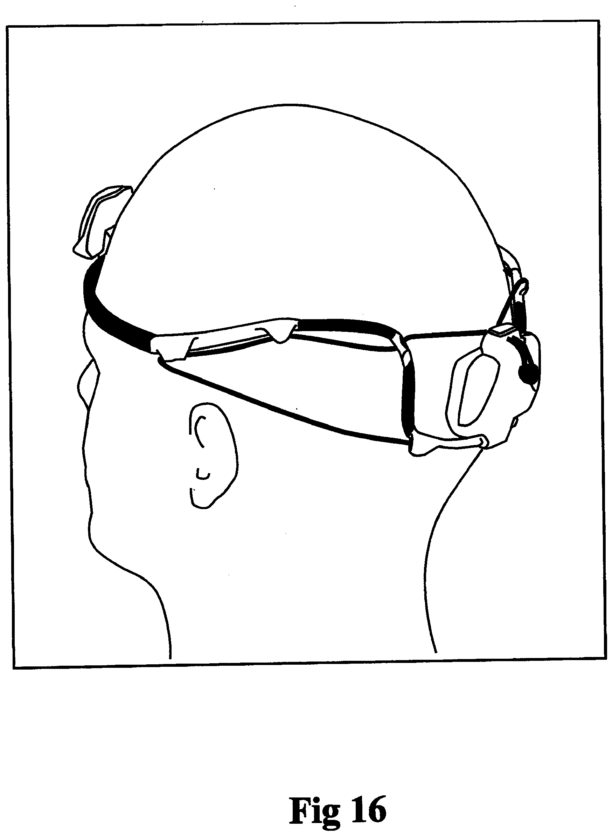

C'est ce que l'on constate avec le schéma de la figure 16 qui montre que, à présent, le bandeau rigide/semi-rigide est parfaitement adapté à la dimension de la nouvelle tête d'utilisateur.

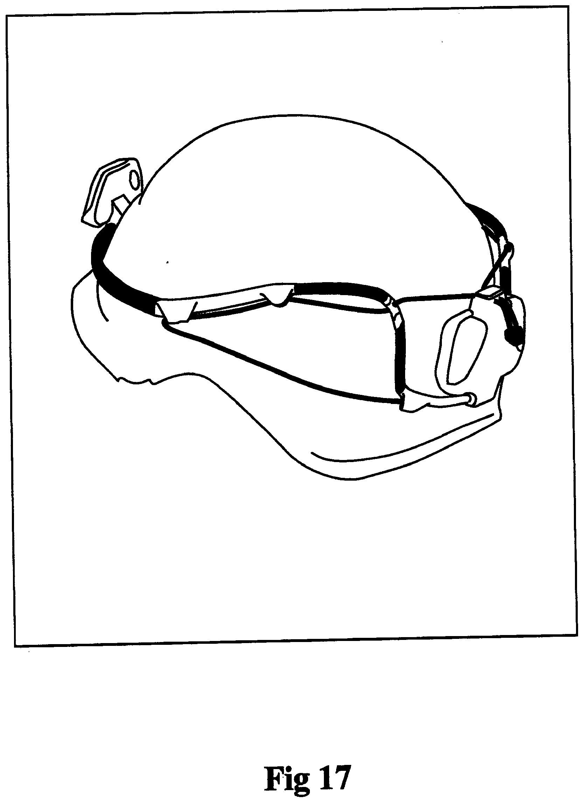

La figure 17 illustre l'ajustage du bandeau rigide/semi-rigide suivant le second mode de réalisation sur un casque.

Comme on le voit avec les figures qui viennent d'être décrites, le nouveau bandeau présente une capacité d'ajustement exceptionnelle puisqu'il permet des variations de 19cm de périmètres pour les différentes têtes d'utilisateurs, et même le casque de la figure 17. Cela est clairement un avantage significatif de ce nouveau type de bandeau.

On a évoqué précédemment l'aptitude de la lampe 101, illustrée dans la figure 12b, à tourner autour de la partie avant rigide 100 au moyen d'un pivot présentant une large amplitude. Il en résultes de nouvelles utilisations particulièrement commodes, notamment en tour du cou ou lorsqu'elle est accrochée à un support, comme une branche d'arbre.

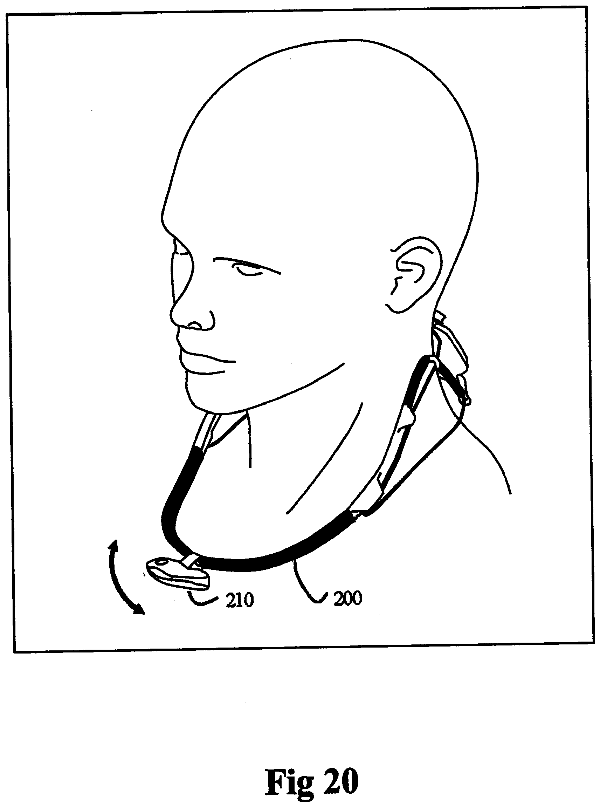

Cet aspect particulier va être décrit à présent en détail, en référence à la figure 20 qui illustre une lampe frontale comporte une lampe 210 dotée d'une source lumineuse qui est fixée sur un bandeau permettant le maintien de la lampe frontale sur la tête d'un utilisateur. Le bandeau comporte une partie avant rigide/semi-rigide 200 servant de support à la lampe 210. Deux pivots , respectivement 201 et 202, sont disposés sur la partie avant du bandeau pour permettre un large pivotement de 180 degrés au moins.

Une telle variation dans le pivotement de la lampe est en général inutile lorsque la lampe est portée conventionnellement sur la tête d'un utilisateur. En effet, un pivot de 180 degrés de la lampe 210 tendrait à faire « buter» la lampe 210 contre le front de l'utilisateur.

Par conséquent, une lampe frontale n'est pas dotée, de manière conventionnelle , du pivot dotée d'une telle amplitude.

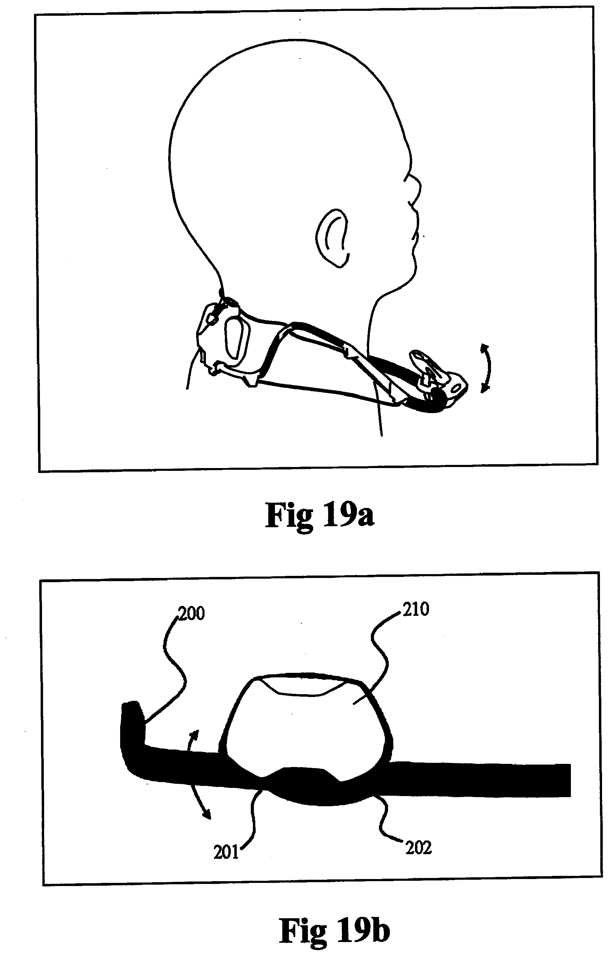

De façon surprenante, un tel pivot s'avère particulièrement opportun et la lampe peut alors être avantageusement portée en « tour de cou » par un utilisateur comme cela est illustrée en figures 19a ou 20.

Dans une telle situation, on rencontre la combinaison de deux effets techniques particulièrement féconds :
En premier lieu, un pivot présentant une amplitude de 180 degrés permet alors de venir régler le faisceau lumineux dans une large gamme d'utilisation. Ainsi, l'utilisateur pour ajuster le faisceau lumineux pour qu'il éclaire vers le bas ou, au contraire pour qu'il éclaire à l'horizontal. La lampe devient ainsi utilisable dans cette seconde configuration, voire d'autres puisque la même facilité de réglage devient possible lorsque la lampe frontale est accrochée à un support ;
En second lieu, le pivot étant fixée sur une partie rigide/semi-rigide du bandeau de maintien, il en découle une grande stabilité de la lampe qui peut alors être ajustée avec précision et facilité en fonction des besoins de l'utilisateur.

Comme on le voit, la combinaison des deux moyens de l'invention, un pivot d'une grande amplitude (180 degrés) sur un support rigide/semi-rigide , confère à la lampe frontale de nouvelles possibilités d'utilisation.

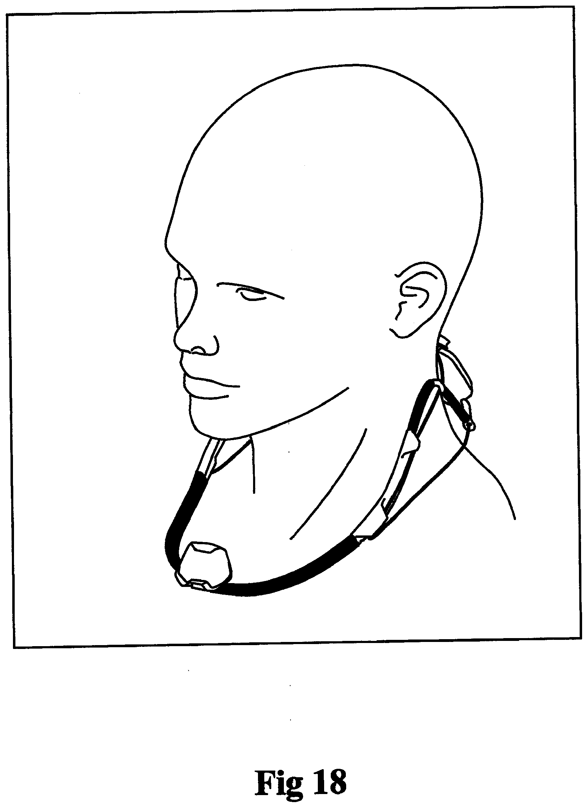

La figure 18 illustre une vue de droite d'un mannequin portant, autour de son cou, un mode de réalisation d'une lampe frontale conforme à la présente invention, dans lequel la lampe est montrée dans deux positions de pivot distinctes.

La figure 19a illustre une vue de gauche d'un mannequin portant, autour de son cou, un mode de réalisation d'une lampe frontale conforme à la présente invention.

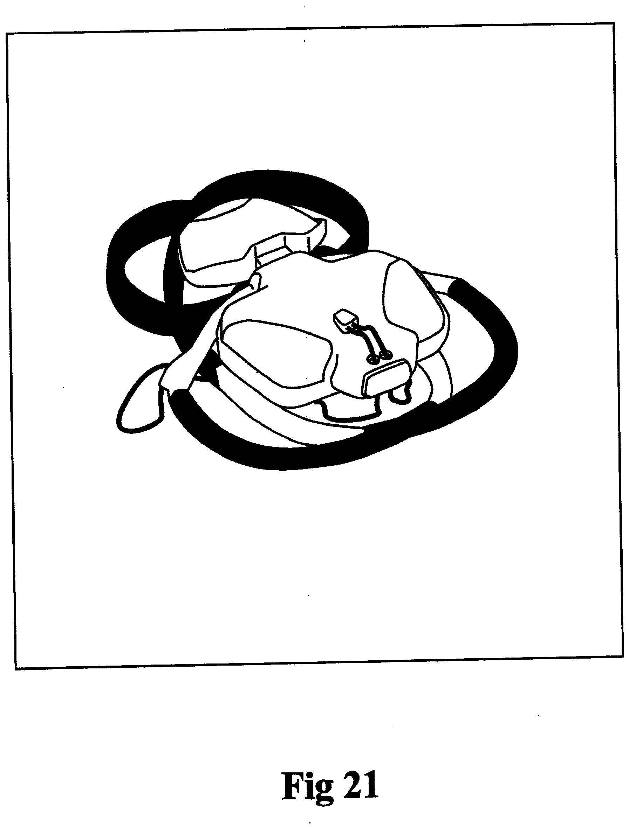

La figure 21 est un mode de réalisation d'un bandeau comportant une batterie dotée d'un moyen de fixation permettant la fixation de la lampe sur cette batterie. Il en résulte une possibilité de « pliage » de la lampe sous une forme particulièrement compacte.

Comme on l'a vu dans l'exposé précédent, l'invention peut permettre de multiples réalisations diverses en fonction des besoins du concepteurs. La figure 22 illustre une configuration de la lampe frontale pouvant être positionnée sur un support quelconque, par exemple une table. Les figures ne sont données qu'à titre d'illustration, nullement limitatives et, clairement, un homme du métier pour adopter le nouveau bandeau rigide/semi-rigide à la réalisation de toute une vaste gamme de lampe.

## Revendications

1. Lampe frontale comportant :
- une lampe (40) dotée d'une source lumineuse ;
- un bandeau (50) permettant la fixation de la lampe sur la tête d'un utilisateur,
dans laquelle le bandeau est de longueur constante, symétrique par rapport à un plan sagittal médian, et **caractérisée en ce qu'**elle comporte une alternance d'éléments rigides/semi-rigides (56, 57, 58 ; 51-54) pour permettre une déformation dans l'espace et l'ajustage à la tête d'un utilisateur.

2. Lampe frontale selon la revendication 1 **caractérisée en ce que** ledit bandeau (50) comporte
- une partie avant rigide/semi-rigide (100) permettant une déformabilité suivant un premier plan (x, y) ;
- une partie intermédiaire rigide/semi-rigide (111-115, 121-125) permettant une déformabilité suivant un second plan (x, z) ;
- une partie arrière rigide/semi-rigide (116) permettant une déformabilité suivant un troisième plan (y, z) ;
ledit bandeau comportant des éléments (111a, 111b; 121a, 121b) permettant la fixation et le passage d'un élastique de serrage (150, 151) permettant de contraindre la déformation du bandeau rigide/semi-rigide suivant les trois plans.

3. Lampe frontale selon la revendication 2 **caractérisée en ce qu'**elle comporte, à l'arrière, une batterie (130) pour l'alimentation électrique de la lampe.

4. Lampe frontale selon la revendication 3 **caractérisée en ce qu'**elle comporte une système de fixation de la batterie à la lampe pour permettre une pliage et un rangement compact de la lampe frontale.

5. Lampe frontale selon la revendication 2 **caractérisée en ce qu'**elle comporte, à l'arrière, un feu arrière.

6. Lampe frontale selon la revendication 2 **caractérisée en ce que** le bandeau est creux et comporte une pluralité de conducteurs électriques servant à l'alimentation électrique de la lampe et/ou la commande des fonctionnalités de la lampe.

7. Lampe frontale selon la revendication 2 **caractérisée en ce que** le bandeau intègre une ou plusieurs fibres optiques permettant de véhiculer vers l'arrière une fraction du faisceau lumineux générée par ladite lampe ou alternativement permettant de véhiculer vers l'avant ou sur les côtés une fraction d'un faisceau lumineux généré par un boîtier arrière.

8. Lampe frontale selon la revendication 6 **caractérisée en ce que** le bandeau est doté de commutateurs et/ou d'un afficheur pour la commande des fonctionnalités de la lampe.

9. Lampe frontale selon la revendication 1 **caractérisée en ce qu'**elle comporte :
- une partie avant (100) constituée d'un premier élément semi-rigide ;
- une partie arrière (116) constituée d'un élément rigide ou semi-rigide
- une branche gauche se composant:
- un premier élément rigide (111) comportant une première extrémité inférieure et une seconde extrémité supérieure,
dans lequel ledit premier élément rigide (111) présente une rigidité supérieure à celle des parties avant (100) ou arrière (116),
dans lequel la première extrémité dudit premier élément rigide (111) est fixée à une première extrémité de la partie avant (100), ledit premier élément rigide (111) comportant, respectivement à ses deux extrémités inférieure et supérieure, un premier et un second élément de passage (111a, 111b) pour un premier élastique de serrage (150);
- un second élément semi-rigide (112) ayant une première extrémité et une seconde extrémité,
dans lequel ladite première extrémité du second élément (112) est fixée à la seconde extrémité dudit premier élément (111) ;
- un troisième élément rigide (113) ayant une première extrémité et une seconde extrémité et comportant un orifice de passage pour ledit premier élastique (150) provenant du second élément de passage (111b) du premier élément (111);
dans lequel la première extrémité dudit troisième élément (113) est fixée à la seconde extrémité dudit second élément (112);
- un quatrième élément semi-rigide (114) ayant une première extrémité et une seconde extrémité;
dans lequel la première extrémité du quatrième élément (114) est fixée à la seconde extrémité dudit troisième élément (113);
- un cinquième élément rigide (115) ayant une première extrémité et une seconde extrémité;
dans lequel la première extrémité du cinquième élément (115) est fixée à la seconde extrémité du quatrième élément (114);
dans lequel la seconde extrémité du cinquième élément (115) est fixée à une première extrémité de la partie arrière (116);
dans lequel ledit cinquième élément (115) permet la fixation de l'élastique (150) provenant du point de premier élément de passage (111a) dudit premier élément (111);
une branche droite se composant:
- un sixième élément rigide (121) comportant une première extrémité inférieure et une seconde extrémité supérieure,
dans lequel ledit sixième élément rigide (121) présente une rigidité supérieure à celle des parties avant (100) ou arrière (116),
dans lequel la première extrémité dudit sixième élément (121) est fixée à une seconde extrémité de la partie avant (100), ledit sixième élément (121) comportant, respectivement à ses deux extrémités inférieure et supérieure, un premier et un second élément de passage (121a, 121b) pour un second élastique de serrage (151);
- un septième élément semi-rigide (122) ayant une première extrémité et une seconde extrémité,
dans lequel ladite première extrémité du septième élément (122) est fixée à la seconde extrémité dudit sixième élément (121) ;
- un huitième élément rigide (123) ayant une première extrémité et une seconde extrémité et comportant un orifice de passage pour ledit second élastique (151) provenant du second élément de passage (121b) du sixième élément (121);
dans lequel la première extrémité dudit huitième élément (123) est fixée à la seconde extrémité dudit septième élément (122);
- un neuvième élément semi-rigide (124) ayant une première extrémité et une seconde extrémité;
dans lequel la première extrémité du neuvième élément (124) est fixée à la seconde extrémité dudit huitième élément (123);
- un dixième élément rigide (125) ayant une première extrémité et une seconde extrémité;
dans lequel la première extrémité du dixième élément (125) est fixée à la seconde extrémité du neuvième élément (124);
dans lequel la seconde extrémité du dixième élément (125) est fixée à une seconde extrémité de la partie arrière (116) ;
dans lequel ledit dixième élément (125) permet la fixation du second élastique (151) provenant du point de premier élément de passage (121a) dudit sixième élément (121) ;

10. Lampe frontale selon l'une quelconque des revendications 2 à 9, dans laquelle ladite lampe (20) est dotée d'au moins un pivot permettant de pivoter sur ladite partie avant dudit bandeau, et configurée pour permettre un pivot d'au moins 180 degrés.

11. Lampe frontale selon la revendication 10 **caractérisée en ce que** le pivot permet de régler le faisceau lumineux de la lampe pour un éclairage horizontal, mais également vers le bas, lorsque le lampe est portée en tour de cou.

12. Lampe frontale selon l'une quelconque des revendications précédentes **caractérisée en ce qu'**elle comporte un boîtier arrière mobile en rotation pour permettre diverses dispositions de signalisation arrières.

## Patentansprüche

1. Stirnlampe, umfassend:
- eine Lampe (40) mit einer Lichtquelle;
- ein Band (50) zum Befestigen der Lampe am Kopf eines Benutzers,
wobei das Band eine konstante Länge aufweist, symmetrisch in Bezug auf eine mittlere Sagittalebene, und **dadurch gekennzeichnet, dass** es einen Wechsel von starren/halbstarren Elementen (56, 57, 58; 51-54) umfasst, um eine Verformung im Raum und eine Anpassung an den Kopf eines Benutzers zu ermöglichen.

2. Stirnlampe nach Anspruch 1, **dadurch gekennzeichnet, dass** das Stirnband (50) Folgendes umfasst
- einen starren/halbstarren Vorderteil (100), der eine Verformbarkeit entlang einer ersten Ebene (x, y) ermöglicht;
- einen starren/halbstarren Zwischenabschnitt (111-115, 121-125), der eine Verformbarkeit entlang einer zweiten Ebene (x, z) ermöglicht;
- einen starren/halbstarren Hinterteil (116), der eine Verformbarkeit entlang einer dritten Ebene (y, z) ermöglicht,
wobei das Band Elemente (111a, 111b, 121a, 121b) beinhaltet, die die Befestigung und den Durchgang eines elastischen Klemmbandes (150, 151) ermöglichen, das es ermöglicht, die Verformung des starren/halbstarren Bandes gemäß den drei Ebenen zu begrenzen.

3. Stirnlampe nach Anspruch 2, **dadurch gekennzeichnet, dass** sie an der Rückseite eine Batterie (130) für die elektrische Stromversorgung der Lampe umfasst.

4. Stirnlampe nach Anspruch 3, **dadurch gekennzeichnet, dass** sie ein System zum Befestigen der Batterie an der Lampe umfasst, um das Falten und die kompakte Lagerung des Stirnlampes zu ermöglichen.

5. Stirnlampe nach Anspruch 2, **dadurch gekennzeichnet, dass** sie an der Rückseite ein Rücklicht umfasst.

6. Stirnlampe nach Anspruch 2, **dadurch gekennzeichnet, dass** das Stirnband hohl ist und eine Vielzahl von elektrischen Leitern aufweist, die der elektrischen Versorgung der Lampe und/oder der Steuerung der Funktionen der Lampe dienen.

7. Stirnlampe nach Anspruch 2, **dadurch gekennzeichnet, dass** das Band eine oder mehrere Lichtleitfasern beinhaltet, um einen Teil des von der Lampe erzeugten Lichtstrahls nach hinten zu transportieren oder alternativ um einen Teil des Lichts nach vorne oder an den Seiten einen von einem hinteren Gehäuse erzeugten Lichtstrahl zu transportieren.

8. Stirnlampe nach Anspruch 6, **dadurch gekennzeichnet, dass** das Stirnband mit Schaltern und/oder einer Anzeige zum Steuern der Funktionen der Lampe versehen ist.

9. Stirnlampe nach Anspruch 1, **dadurch gekennzeichnet, dass** sie umfasst:
- einen Vorderteil (100), der aus einem ersten halbstarren Element besteht;
einen hinteren Teil (116), bestehend aus einem starren oder halbstarren Element
- einen linken Ast, bestehend aus:
- einem ersten starren Element (111) mit einem ersten unteren Ende und einem zweiten oberen Ende,
wobei das erste starre Element (111) eine größere Steifigkeit aufweist als die vorderen (100) oder hinteren (116) Teile,
wobei das erste Ende des ersten starren Elements (111) an einem ersten Ende des Vorderteils (100) befestigt ist, wobei das erste starre Element (111) an seinen beiden unteren und oberen Enden jeweils ein erstes und ein zweites Durchgangselement (111a, 111b) für ein erstes klemmendes Elastik (150) aufweist;
- ein zweites halbstarres Element (112) mit einem ersten Ende und einem zweiten Ende,
wobei das erste Ende des zweiten Elements (112) an dem zweiten Ende des ersten Elements (111) befestigt ist;
- ein drittes starres Element (113) mit einem ersten Ende und einem zweiten Ende und mit einem Durchgangsloch für das erste elastische (150) vom zweiten Durchlasselement (111b) des ersten Elements (111);
wobei das erste Ende des dritten Elements (113) an dem zweiten Ende des zweiten Elements (112) befestigt ist;
- ein viertes halbstarres Element (114) mit einem ersten Ende und einem zweiten Ende;
wobei das erste Ende des vierten Elements (114) an dem zweiten Ende des dritten Elements (113) befestigt ist;
- ein fünftes starres Element (115) mit einem ersten Ende und einem zweiten Ende;
wobei das erste Ende des fünften Elements (115) an dem zweiten Ende des vierten Elements (114) befestigt ist;
wobei das zweite Ende des fünften Elements (115) an einem ersten Ende des hinteren Teils (116) befestigt ist;
wobei das fünfte Element (115) die Befestigung des elastischen (150) vom ersten Durchgangselement (111a) des ersten Elements (111) ermöglicht;
einen rechten Zweig, bestehend aus:
- ein sechstes starres Element (121) mit einem ersten unteren Ende und einem zweiten oberen Ende, wobei das sechste starre Element (121) eine höhere Steifigkeit aufweist als die vorderen (100) oder hinteren Teile (116)),
wobei das erste Ende des sechsten Elements (121) an einem zweiten Ende des Vorderteils (100) befestigt ist, wobei das sechste Element (121) sowohl an seinem unteren als auch an seinem oberen Ende jeweils ein erstes und ein zweites Durchgangselement (121a, 121b) für ein zweites klemmendes elastisches (151) aufweist;
- ein siebtes halbstarres Element (122) mit einem ersten Ende und einem zweiten Ende,
wobei das erste Ende des siebten Elements (122) an dem zweiten Ende des sechsten Elements (121) befestigt ist;
- ein achtes starres Element (123) mit einem ersten Ende und einem zweiten Ende und mit einem Durchgangsloch für das zweite elastische (151) vom zweiten Durchgangselement (121b) des sechsten Elements (121);
wobei das erste Ende des achten Elements (123) an dem zweiten Ende des siebten Elements (122) befestigt ist;
- ein neuntes halbstarres Element (124) mit einem ersten Ende und einem zweiten Ende;
wobei das erste Ende des neunten Elements (124) an dem zweiten Ende des achten Elements (123) befestigt ist;
- ein zehntes starres Element (125) mit einem ersten Ende und einem zweiten Ende;
wobei das erste Ende des zehnten Elements (125) an dem zweiten Ende des neunten Elements (124) befestigt ist;
wobei das zweite Ende des zehnten Elements (125) an einem zweiten Ende des hinteren Teils (116) befestigt ist; wobei das zehnte Element (125) die Befestigung des zweiten elastischen Elements (151) vom ersten Durchgangselement (121a) des sechsten Elements (121) ermöglicht.

10. Stirnlampe nach einem der Ansprüche 2 bis 9, wobei die Stirnlampe (20) mit mindestens einem Drehpunkt versehen ist, um ein Schwenken an dem vorderen Teil des Stirnbandes zu ermöglichen, und konfiguriert ist, um eine Drehung von mindestens 180 Grad zu ermöglichen.

11. Stirnlampe nach Anspruch 10, **dadurch gekennzeichnet, dass** die Drehung es ermöglicht, den Lichtstrahl der Lampe für die horizontale Beleuchtung, aber auch nach unten, wenn die Lampe um den Hals getragen wird, einzustellen.

12. Stirnlampe nach einem der vorstehenden Ansprüche, **dadurch gekennzeichnet, dass** sie ein in Drehung verstellbares Hintergehäuse umfasst, um verschiedene hintere Signalanordnungen zu ermöglichen.

## Claims

1. A headlamp comprising:
- a lamp (40) with a light source;
- a band (50) for fixing the lamp on the head of a user,
wherein the band is of constant length, symmetrical with respect to a median sagittal plane, and **characterized in that** it comprises an alternation of rigid/semi-rigid elements (56, 57, 58 ; 51-54) for allowing deformation in space and adjustment to the head of a user.

2. Headlamp according to claim 1 **characterized in that** said headband (50) comprises
- a rigid/semi-rigid front part (100) allowing deformability along a first plane (x, y);
- a rigid/semi-rigid intermediate portion (111-115, 121-125) allowing deformability along a second plane (x, z);
- a rigid/semi-rigid rear part (116) allowing a deformability along a third plane (y, z),
said band including elements (111a, 111b, 121a, 121b) allowing the fixing and the passage of a clamping elastic (150, 151) which makes it possible to constrain the deformation of the rigid/semi-rigid band according to the three planes.

3. Headlamp according to claim 2, **characterized in that** it comprises, at the rear, a battery (130) for the electric power supply of the lamp.

4. Headlamp according to claim 3 **characterized in that** it comprises a system for fixing the battery to the lamp to allow folding and compact storage of the headlamp.

5. The headlamp according to claim 2, **characterized in that** it comprises, at the rear, a rear light.

6. The headlamp according to Claim 2, **characterized in that** the headband is hollow and has a plurality of electrical conductors serving for the electrical supply of the lamp and/or for controlling the functions of the lamp.

7. The headlamp according to Claim 2, **characterized in that** the band incorporates one or more optical fibers for conveying a fraction of the light beam generated by said lamp backwards or alternatively for conveying a fraction of the light towards the front or on the sides a light beam generated by a rear housing.

8. The headlamp according to Claim 6, **characterized in that** the headband is provided with switches and/or a display for controlling the functions of the lamp.

9. The headlamp according to claim 1 **characterized in that** it comprises:
- a front part (100) consisting of a first semi-rigid element;
a rear part (116) consisting of a rigid or semi-rigid element
- a left branch consisting of:
- a first rigid element (111) having a first lower end and a second upper end,
wherein said first rigid element (111) has a stiffness greater than that of the front (100) or rear (116) parts,
wherein the first end of said first rigid element (111) is attached to a first end of the front part (100), said first rigid element (111) having, respectively at its two lower and upper ends, a first and a second passage element (111a, 111b) for a first clamping elastic (150);
- a second semi-rigid element (112) having a first end and a second end,
wherein said first end of the second element (112) is attached to the second end of said first element (111);
- a third rigid element (113) having a first end and a second end and having a through hole for said first elastic (150) from the second passage element (111b) of the first element (111);
wherein the first end of said third element (113) is attached to the second end of said second element (112);
- a fourth semi-rigid element (114) having a first end and a second end;
wherein the first end of the fourth element (114) is attached to the second end of said third element (113);
- a fifth rigid element (115) having a first end and a second end;
wherein the first end of the fifth element (115) is attached to the second end of the fourth element (114);
wherein the second end of the fifth element (115) is attached to a first end of the rear part (116);
wherein said fifth element (115) allows attachment of the elastic (150) from the first passage element (111a) of said first element (111);
a right branch consisting of:
- a sixth rigid element (121) having a first lower end and a second upper end, wherein said sixth rigid element (121) has a higher rigidity than the front (100) or rear parts (116)),
wherein the first end of said sixth element (121) is attached to a second end of the front part (100), said sixth element (121) having, at both its lower and upper ends respectively, a first and a second passage element (121a, 121b) for a second clamping elastic (151);
- a seventh semi-rigid element (122) having a first end and a second end,
wherein said first end of the seventh element (122) is attached to the second end of said sixth element (121);
- an eighth rigid element (123) having a first end and a second end and having a passage hole for said second elastic (151) from the second passage element (121b) of the sixth member (121);
wherein the first end of said eighth element (123) is attached to the second end of said seventh element (122);
- a ninth semi-rigid element (124) having a first end and a second end;
wherein the first end of the ninth element (124) is attached to the second end of said eighth element (123);
- a tenth rigid element (125) having a first end and a second end;
wherein the first end of the tenth element (125) is attached to the second end of the ninth element (124);
wherein the second end of the tenth element (125) is attached to a second end of the rear part (116); wherein said tenth element (125) allows attachment of the second elastic (151) from the first passage element (121a) of said sixth member (121).

10. The headlamp according to any one of claims 2 to 9, wherein said lamp (20) is provided with at least one pivot to allow pivot on said front part of said headband, and configured to allow a pivot of at least 180 degrees .

11. The headlamp according to Claim 10, **characterized in that** the pivot makes it possible to adjust the light beam of the lamp for horizontal illumination, but also downwards when the lamp is worn around the neck.

12. The headlamp according to any one of the preceding claims, **characterized in that** it comprises a rear housing movable in rotation to allow various rear signaling arrangements.
